**Europäisches Patentamt**

**European Patent Office**

**Office européen des brevets**

(19)

(11) Veröffentlichungsnummer : **0 383 758 B1**

(12) # EUROPÄISCHE PATENTSCHRIFT

(45) Veröffentlichungstag der Patentschrift :
25.11.92 Patentblatt 92/48

(51) Int. Cl.$^5$ : **B60T 1/06,** F16D 55/36

(21) Anmeldenummer : 88903809.7

(22) Anmeldetag : 22.04.88

(86) Internationale Anmeldenummer :
**PCT/EP88/00340**

(87) Internationale Veröffentlichungsnummer :
**WO 88/08383 03.11.88 Gazette 88/24**

(54) **BREMSANLAGE.**

(30) Priorität : **25.04.87 DE 3713916**

(43) Veröffentlichungstag der Anmeldung :
**29.08.90 Patentblatt 90/35**

(45) Bekanntmachung des Hinweises auf die
Patenterteilung :
**25.11.92 Patentblatt 92/48**

(84) Benannte Vertragsstaaten :
**DE GB IT SE**

(56) Entgegenhaltungen :
**DE-A- 1 920 509**
**DE-A- 2 016 710**
**DE-A- 3 117 772**
**GB-A- 2 117 465**
**US-A- 4 113 044**

(73) Patentinhaber : **ZF FRIEDRICHSHAFEN
Aktiengesellschaft
Löwentaler Strasse 100 Postfach 2520
W-7990 Friedrichshafen 1 (DE)**

(72) Erfinder : **SCHUSTER, Max
Bratfischwinkel 8
W-8390 Passau (DE)**

(74) Vertreter : **Raue, Reimund
ZF FRIEDRICHSHAFEN Aktiengesellschaft
Löwentalerstrasse 100 Postfach 2520
W-7990 Friedrichshafen 1 (DE)**

**Beschreibung**

Die Erfindung betrifft eine Bremsanlage nach dem Oberbegriff des Patentanspruchs 1.

Aus der US-A-4 113 044 ist eine derartige Triebachse bekannt geworden, die neben. einem Differential hydraulisch betätigbare Lamellenbremsen aufweist. Die inneren Bremslamellen der Lamellenbremsen sind drehfest auf den Abtriebswellen gelagert, während die äußeren Bremslamellen in Achsgehäuse drehfest abgestützt sind.

Die Straßenverkehrsordnung schreibt unter anderem für Kraftfahrzeuge mechanische Feststellbremsen vor, die direkt auf beide Räder einer Achse wirken. Die räumlich voneinander entfernt liegenden Feststellbremseinrichtungen müssen so mechanisch, z. B. durch einen Seilzug, miteinander verbunden sein, um synchron zu wirken. Dies setzt - neben dem konstruktiven Aufwand - eine sorgfältige Justierung der Bremselemente voraus, die immer wieder nachgestellt werden muß.

Der Erfindung liegt die Aufgabe zugrunde, eine Feststellbremse mit geringem konstruktiven Aufwand und verbesserter Funktion bereitzustellen.

Diese Aufgabe wird erfindungsgemäß dadurch gelöst, daß auf einer Seite des Differentials zusätzliche Bremslamellen am Differentialantrieb so angeordnet sind, daß sie koaxial mit den inneren und äußeren Bremslamellen der Abtriebswellen und des Achsgehäuses sind und mit diesen zusammenwirken, so daß eine mechanische Feststellbremsbetätigung die inneren, äußeren und zusätzlichen Bremslamellen, die sowohl Bestandteil der Betriebs- als auch der Ferstellbremse sind, verdrehsicher zusammenpreßt.

Es ist bekannt (DE-PS 31 17 772), eine Feststellbremse mit einer Schaltkupplung, die einer Antriebsachse eine weitere Achse zuschaltet, zu kombinieren. Bei dieser Ausführung wirkt ein Teil der inneren Bremslamellen einer Feststellbremse auf die Antriebsachse und ein anderer Teil der inneren Bremslamellen der Feststellbremse auf die zuschaltbare koaxiale Achse. Die inneren Bremslamellen wirken hier direkt auf beide Achsen.

Erfindungsgemäß sind an einem Differential mit einem Differentialantrieb und zwei Abtriebswellen innere Bremslamellen auf beiden Abtriebswellen und dem Differentialantrieb so angeordnet, daß diese inneren Bremslamellen mit koaxialen am Achsgehäuse befestigten äußeren Bremslamellen zusammenwirken. Steht der Differentialantrieb und eine Abtriebswelle, so wirkt das Differential als starres Übertragungsglied und es steht auch die gegenüberliegende Abtriebswelle still. Somit genügt eine Vorrichtung zum Betätigen der Feststellbremse, die auf das Bremslamellenpaket des Differentialantriebs und einer Abtriebswelle wirkt, um beide Abtriebswellen einer angetriebenen Achse mit Differential festzustellen.

Somit erübrigt es sich, eine mechanische Feststellbremse für Kraftfahrzeuge mit einer Betätigungsvorrichtung zu versehen, die zwei räumlich voneinander entfernt liegende Bremseinrichtungen verbindet, und es erübrigt sich, die Elemente der Feststellbremse zu justieren, um synchrone Bremswirkung an beiden Rädern einer angetriebenen Achse zu gewährleisten.

Die Bremslamellenpakete können sowohl als Betriebsbremse als auch als Feststellbremse kombiniert genutzt werden.

Die Anzahl der Bremslamellen zu beiden Seiten des Differentials kann gleich sein und falls die Bremslamellenpakete gemeinsam als Betriebs- und Feststellbremse genutzt werden, sind gleiche Betriebsbremskräfte an beiden Abtriebswellen mit zum Differential symmetrisch angeordneten Bremslamellen besonders einfach zu erreichen.

Bei zum Differential asymmetrischer Anordnung der Bremslamellen können, um die Wirkung der Betriebsbremse auf die beiden Abtriebswellen zu synchronisieren, sowohl die Reibbeiwerte der Bremslamellenbeschichtung als auch die Anzahl der Bremslamellen zu beiden Seiten des Differentials variiert werden.

Die Feststellbremse wird vorzugsweise durch eine vorgespannte Feder betätigt, die die Bremse bei Stillstand des Kraftfahrzeuges geschlossen hält. Bei Betrieb des Kraftfahrzeugs wird die Bremse durch hydraulischen Druck geöffnet.

Die Ansprüche enthalten eine sinnvolle Kombination von Lösungsmerkmalen, allerdings sind für den Fachmann im Rahmen der Erfindung weitere Kombinationen ohne weiteres möglich.

In der Zeichnung sind Ausführungsbeispiele der Erfindung dargestellt:

Fig. 1 zeigt eine Bremsanlage mit zum Differential asymmetrischer Bremslamellenanordnung;

Fig. 2 zeigt eine mechanische Vorrichtung zum Betätigen der Feststellbremse;

Fig. 3 zeigt eine alternative Vorrichtung zum Betätigen der Feststellbremse.

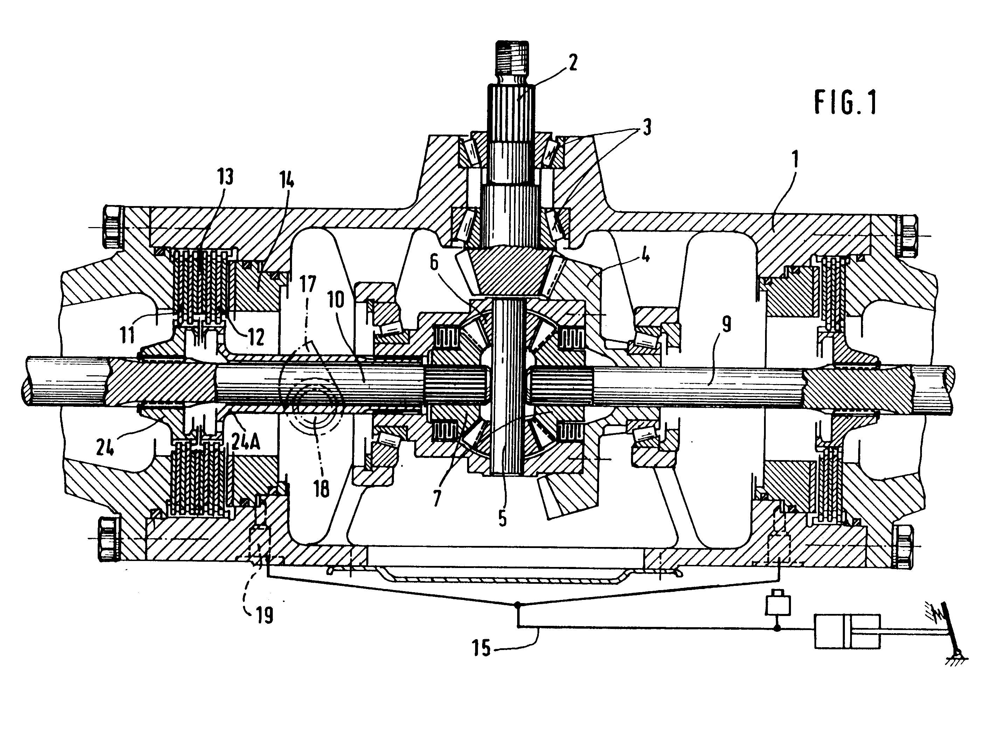

Fig. 1: Von einem Motor oder einem Getriebe (nicht dargestellt) führt in ein Achsgehäuse 1 eine Antriebswelle 2 zu einem Differential. Die Antriebswelle 2 ist mit Kegelrollenlagern 3 im Achsgehäuse 1 gelagert.

Die Antriebswelle 2 ist an ihrem differentialseitigen Ende verzahnt und treibt einen Differentialantrieb 4 an, der über einen Bolzen 5 und Ausgleichskegelräder 6 und Achskegelräder 7 zwei Abtriebswellen 9 und 10 antreibt.

Die Abtriebswellen 9 und 10 führen von beiden Seiten des Differentials und koaxial zueinander zu den Kraftfahrzeugrädern (nicht dargestellt).

Im Inneren des Achsgehäuses 1 sind in unmittelbarer Nähe auf beiden Seiten des Differentials Außenlamellen 13 am Achsgehäuse 1 drehfest und in Abtriebswellenlängsrichtung verschieblich angebracht. Zwischen die äußeren Lamellen 13 greifen innere Lamellen 11, die zu beiden Seiten des Differentials direkt auf den links- und rechtsseitigen Abtriebswellen 9 und 10 drehfest und axial verschieblich gehalten sind. Auf einer Seite des Differentials sind innere Lamellen 12, die auf einem Lamellenträger 24A drehfest und axial verschieblich gehalten sind und ebenfalls zwischen die äußeren Lamellen 13 greifen. Der Lamellenträger 24A ist fest mit dem Differentialantrieb 4 verbunden.

Im Achsgehäuse 1 sind auf die Bremslamellen 11, 12, 13 wirkende Kolben 14 angebracht. Auf die Kolben 14 wirkt über einen Anschluß 19 ein Druckmedium eines Betriebsbremssystems 15, das die Kolben 14 bei einer Bremsung gegen die Lamellen 11, 12, 13 drückt.

Auf der in Fig. 1 linken Seite des Differentials wirkt auf den Kolben 14 zusätzlich eine mechanische Feststellbremseinrichtung 16.

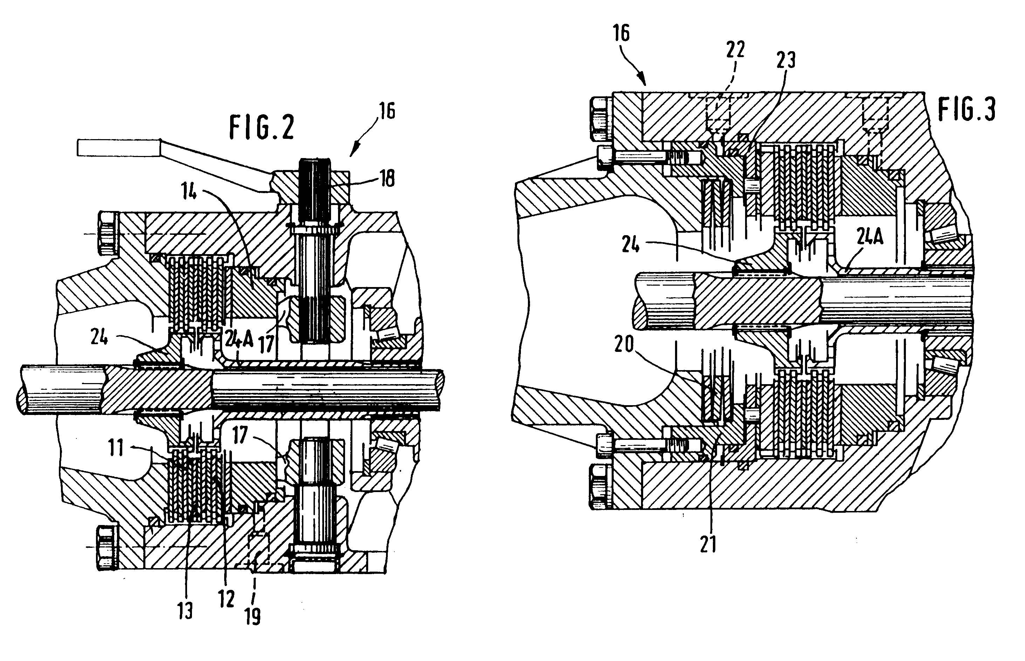

Fig. 2: Die mechanische Feststellbremseinrichtung 16 drückt die mit dem Achsgehäuse 1, der Abtriebswelle 10 und dem Differentialantrieb 4 verbundenen Bremslamellen 11, 12, 13 zusammen und verhindert somit deren Drehung. Die gegenüberliegende Abtriebswelle 9 ist von der stillstehenden Abtriebswelle 10 und dem stillstehenden Differentialantrieb 4 ebenfalls im Stillstand.

Die mechanische Feststellbremseinrichtung 16 ist mit Nocken 17, die über eine drehbare Welle 18 gedreht werden und auf den Kolben 14 wirken, versehen. Der Kolben 14 drückt die Bremslamellen 11, 12, 13 verdrehsicher zusammen.

Fig. 3: Der Aufbau des Differentials und die Anordnung der Abtriebswellen 9, 10 und der Bremslamellen 11, 12, 13 ist identisch mit der in Fig. 1 dargestellten Anordnung. Die Feststellbremse wird in Schließrichtung durch eine vorgespannte Feder 20, die über einen Feststellkolben 21 auf die Bremslamellen 11, 12, 13 drückt, betätigt. Wird das Kraftfahrzeug in Betrieb genommen, kann die Feststellbremse hydraulisch geöffnet werden. Ein Druckmedium, angeführt über einen Anschluß 22, wirkt auf einen unverschieblichen Zwischenring 23 und den Feststellkolben 21, und entgegen der Federkraft der Feder 20 drückt es den Feststellkolben 21 von den Bremslamellen 11, 12, 13 weg. Der hydraulische Druck wird während des Betriebs des Kraftfahrzeugs vorzugsweise durch eine am Antrieb des Kraftfahrzeugs vorhandene Pumpe (nicht dargestellt) verfügbar gemacht.

Die inneren Bremslamellen 11 der Abtriebswellen 9, 10 sind auf Lamellenträgern 24 montiert, so daß die Abmessungen der inneren Bremslamellen 11 der Abtriebswellen 9, 10 identisch mit den Abmessungen der inneren Bremslamellen 12 auf dem Lamellenträger 24A des Differentialantriebs 4 sind.

Bezugszeichen

| 1 | Achsgehäuse |
| 2 | Antriebswelle |
| 3 | Kegelrollenlager |
| 4 | Differentialantrieb |
| 5 | Bolzen |
| 6 | Ausgleichskegelräder |
| 7 | Achskegelräder |
| 9 | Abtriebswelle |
| 10 | Abtriebswelle |
| 11 | Bremslamelle innen auf Abtriebswelle |
| 12 | Bremslamelle innen auf Differentialantrieb |
| 13 | Bremslamelle außen im Achsgehäuse |
| 14 | Kolben |
| 15 | Betriebsbremssystem |
| 16 | mechanische Feststellbremseinrichtung |
| 17 | Nocken |
| 18 | drehbare Welle |
| 19 | Anschluß |
| 20 | Feder |
| 21 | Feststellkolben |
| 22 | Anschluß |
| 23 | Zwischenring |
| 24 | Lamellenträger |
| 24A | Lamellenträger |

**Patentansprüche**

1. Bremsanlage, insbesondere für Kraftfahrzeuge, mit einem innerhalb eines Achsgehäuses (1) angeordneten Differential, dessen Differentialantrieb (4) über Ausgleichskegelräder (6) und Achskegelräder (7) zwei Abtriebswellen (9, 10) antreibt sowie inneren Bremslamellen (11), die auf den Abtriebswellen (9, 10) drehfest und axial verschieblich gelagert sind und äußeren Bremslamellen (13), die im Achsgehäuse (1) drehfest und axial verschieblich gelagert sind und Kolben (14), die auf die inneren und äußeren Bremslamellen (11, 13) wirken und über einen Anschuß (19) an ein Betriebsbremssystem (15) angeschlossen sind, dadurch **gekennzeichnet**, daß auf einer Seite des Differentials zusätzliche Bremslamellen (12) am Differentialantrieb (4) so angeordnet sind, daß sie koaxial mit den inneren und äußeren Bremslamellen (11, 13) der Abtriebswellen (9, 10) und des Achsgehäuses (1) sind und mit diesen zusammenwirken, so daß eine mechanische Feststellbremsbetätigung die inneren, äußeren und zusätzliche Bremslamellen (11, 12, 13), die sowohl Bestandteil des Betriebs- als auch der Feststellbremse sind, verdrehsicher zusammenpreßt.

2. Bremsanlage nach Anspruch 1, dadurch **gekennzeichnet**, daß die Anzahl der Bremslamellen (11, 12, 13) auf einer Seite des Differentials sich unterscheidet von der Anzahl der Bremslamellen (11, 13) auf der gegenüberliegenden Seite des Differentials.

3. Bremsanlage nach Anspruch 2, dadurch **gekennzeichnet,** daß die Bremslamellen unterschiedliche Reibbeiwerte haben.

4. Bremsanlage nach Anspruch 1, dadurch **gekennzeichnet,** daß bei Nicht-Betrieb des Kraftfahrzeuges inneren, äußeren und zusätzliche die Bremslamellen (11, 12, 13) von einer vorgespannten Feder (20) zusammengepreßt werden und daß bei Inbetriebnahme des Kraftfahrzeuges ein hydraulischer Druck erzeugt wird, der auf einen Feststellkolben (21) wirkt, mit dem die Feder (20) in ihre Ruhelage gedrückt wird und die o.g. Bremslamellen (11, 12, 13) freigibt.

5. Bremsanlange nach den Ansprüchen 1 oder 2, dadurch **gekennzeichnet**, daß die an Lamellenträgern (24) auf den Abtriebswellen (9, 10) gehaltenen inneren Bremslamellen (11) Abmessungen haben, die identisch sind mit den Abmessungen der am Differentialantrieb (4) befestigten inneren zusätzlichen Bremslamellen (12).

6. Bremsanlage nach Anspruch 1, dadurch **gekennzeichnet**, daß die inneren, äußeren und zusätzlichen Bremslamellen (11, 12, 13) symmetrisch zum Differential sind aber nur auf einer Seite des Differentials eine Feststellbremsbetätigung (16) auf die Bremslamellen (11, 12, 13) wirkt.

**Claims**

1. Brake system, in particular for motor vehicles, having a differential, which is disposed inside an axle housing (1) and whose differential drive (4) drives two output shafts (9, 10) via equalising conical gears (6) and axle conical gears (7), and also having inner brake discs (11), which are non-rotatably and axially displaceably mounted on the output shafts (9, 10), outer brake discs (13), which are mounted non-rotatably and axially displaceably in the axle housing (1), and pistons (14), which act on the inner and outer brake discs (11, 13) and are connected via a connecting piece (19) to an operating brake system (15), characterised in that on one side of the differential additional brake discs (12) are so arranged on the differential drive (4) that they are coaxial to the inner and outer brake discs (11, 13) of the output shafts (9, 10) and of the axle housing (1) and cooperate with these, so that a mechanical parking brake actuator presses together in a non-rotatable manner the inner, outer and additional brake discs (11, 12, 13), which are part of both the operating and the parking brake.

2. Brake system according to claim 1, characterised in that the number of brake discs (11, 12, 13) on one side of the differential differs from the number of brake discs (11, 13) on the opposite side of the differential.

3. Brake system according to claim 2, characterised in that the brake discs have different friction coefficients.

4. Brake system according to claim 1, characterised in that, in the case of non-operation of the motor vehicle, the inner, outer and additional brake discs (11, 12, 13) are pressed together by a biased spring (20) and in that, when the motor vehicle is set in motion, a hydraulic pressure is generated, which acts on a parking piston (21), with which the spring (20) is pushed into its rest position and releases the above-mentioned brake discs (11, 12, 13).

5. Brake system according to claims 1 or 2, characterised in that the inner brake discs (11) held on disc carriers (24) on the output shafts (9, 10) have dimensions identical to those of the inner, additional brake discs (12) fixed to the differential drive (4).

6. Brake system according to claim 1, characterised in that the inner, outer and additional brake discs (11, 12, 13) are symmetrical to the differential, but parking brake actuator (16) acts on the brake discs (11, 12, 13) only on one side of the differential.

**Revendications**

1. Dispositif de freinage, en particulier pour les véhicules comportant un différentiel disposé à l'intérieur d'un carter de pont (1) et dont l'entraînement de différentiel (4) actionne deux arbres de sortie (9, 10) par l'intermédiaire de pignons coniques de différentiel (6) et de pignons coniques planétaires (7) et comportant également des disques de freins intérieurs (11) logés sur les arbres de sortie (9, 10) de façons à être solidaires en torsion et pouvant être déplacés dans les sens axial ainsi que des pistons (14) qui agissent sur les disques de freins intérieurs et extérieurs (11, 13) et sont reliés à un système de freinage de service (15) par un raccordement (19), **caractérisé** en ce que des disques de freins auxiliaires (12) sont disposés d'un côté du différentiel sur l'entraînement du différentiel (4) de façon à être coaxiaux avec les disques de freins intérieurs et extérieurs (11, 13) des arbres de sortie (9, 10) et du carter de pont (1) et agissent en commun avec ces derniers de sorte qu'un actionnement mécanique du frein de stationnement presse les uns contre les autres de façon solidaire en torsion les disques de freinage intérieurs, extérieurs et auxiliaires (11, 12, 13) qui sont à la fois composants du frein de service et du frein de stationnement.

2. Dispositif de freinage selon la revendication 1, **caractérisé** en ce que le nombre des disques de freins (11, 12, 13) sur l'un des côtés du différentiel est différent du nombre de disques de freins (11, 13) sur le côté opposé du différentiel.

3. Dispositif de freinage selon la revendication 2, **caractérisé** en ce que les disques de freins ont des coefficients de friction différents.

4. Dispositif de freinage selon la revendication 1, **caractérisé** en ce que les disques de freins intérieurs, extérieurs et auxiliaires (11, 12, 13) sont pressés les uns contre les autres par un ressort en précontrainte (20) lorsque le véhicule n'est pas en situation de service et que, lors de la mise en service du véhicule, une pression hydraulique est créée et agit sur un piston de blocage (21) par lequel le ressort (20) est poussé en sa position de repos et rel che les disques de freinage susmentionnés (11, 12, 13).

5. Dispositif de freinage selon la revendication 1 ou 2, **caractérisé** en ce que les disques de freins intérieurs (11) maintenus par les porte-disques (24) sur les arbres de sortie (9, 10) ont les mêmes cotes que les disques de freins intérieurs auxiliaires (12) fixés sur l'entraînement du différentiel (4).

6. Dispositif de freinage selon la revendication 1, **caractérisé** en ce que les disques de freins intérieurs, extérieurs et auxiliaires (11, 12, 13) sont symétriques par rapport au différentiel mais qu'un actionnement du frein de stationnement (16) n'agit sur les disques de freins (11, 12, 13) que d'un côté du différentiel.

FIG.1

FIG.3

FIG.2